# EUROPEAN PATENT APPLICATION

(11) **EP 1 793 317 A2**
(43) Date of publication of application: **06.06.2007**
(21) Application number: 06024641.0
(22) Date of filing: 28.11.2006
(51) Int. Cl.: G06F 17/24, G06F 17/21

(54) **Dynamic data presentation**

(30) Priority: 05.12.2005 US 295021
(71) Applicant: SAP AG, 69190 Walldorf (DE)
(72) Inventor: Matthee, Stephan D., 74821 Mosbach (DE); Krannich, Bernd P., 74706 Osterburken (DE)
(74) Representative: Müller-Boré & Partner Patentanwälte

(57) **Abstract**

Methods and apparatus are provided, including computer program products, to receive a template for a dormant representation. The template includes a first visualization component definition occurring before a second visualization component definition. The dormant representation is created according to an output format, the dormant representation including a first rendering of the first visualization component definition, and a second rendering of the second visualization component definition. The first rendering in the dormant representation is modified based on state associated with the second visualization component definition.

## Description

### BACKGROUND

The present invention relates to dynamic presentation of data, and more particularly to data presentation in multiple formats.

Typical systems for dynamically presenting data in a web application sequentially process a template description of a user interface in a single run from top to bottom. As a result, a user interface element defined in the template that depends on another user interface element that occurs later in the template will not render correctly. Moreover, user interface elements are typically rendered in a single output format (e.g., HTML) instead of multiple formats. And such systems do not provide a means to convert free content in the template into another output format.

### SUMMARY OF THE INVENTION

The present invention provides methods and apparatus, including computer program products, that implement techniques for dynamically presenting data.

In one general aspect, the techniques feature receiving a template for a dormant representation, the template including a first visualization component definition occurring before a second visualization component definition. Creating the dormant representation according to an output format, the dormant representation including a first rendering of the first visualization component definition, and a second rendering of the second visualization component definition. And modifying the first rendering in the dormant representation based on state associated with the second visualization component definition.

In another general aspect, the techniques feature receiving a template for a dormant representation, the template including a plurality of visualization component definitions. Creating the dormant representation according to an output format and based on the template, the dormant representation including a rendering of each visualization component definition according to a first order. And modifying the rendering of one or more of the plurality of visualization component definitions in the dormant representation according to a second order, the second order being different from the first order and being determined by a rendering dependency.

The invention can be implemented to include one or more of the following advantageous features. First content and second content can be associated with the first and second visualization component definitions, respectively, the first content and the second content obtained from one or more content providers. One or more content providers can be specified by one or more definitions included in the template. A second visualization component definition can be nested in the first visualization component definition. Free content in the template can be converted into the output format if the free content has a format that is different from the output format. A second rendering in the dormant representation can be modified based on state associated with the first visualization component definition. The output format can be one of: HTML, DHTML, XML, BIFF or PDF. The dormant representation can be visually presented. The template can include free content. Dynamic content can be associated with one or more of the plurality of visualization component definitions, the dynamic content included in the dormant representation. The rendering dependency can be based on state associated with each of the plurality of visualization component definitions. The dormant representation can have a corresponding visual presentation.

The invention can be implemented to realize one or more of the following advantages. A visualization component defined in a user interface template can affect the rendering of a visualization component defined earlier in the template. Visualization component definitions can be intermingled with arbitrary content such as HTML, Java and JavaScript in the template. Visualization component definitions can be nested within arbitrary content and other visualization component definitions to express containment relationships in a user interface rendered from the template. The template can be rendered in multiple output formats which enables it to be used to easily generate a user interface or a printable document. Free content in the template can be transformed into another output format. The template can be edited with a design tool. Creating and modifying templates does not require sophisticated programming skills. Placeholders in the template allow the integration of different visualization components. Complex functionality can be encapsulated in visualization components. Visualization components can be enhanced programmatically. A framework provides a programming model for arbitrary visualization components.

At least one implementation of the invention provides the above advantages.

Details of one or more implementations of the invention are set forth in the accompanying drawings and in the description below. Further features, aspects, and advantages of the invention will become apparent from the description, the drawings, and the claims.

### BRIEF DESCRIPTION OF THE DRAWINGS

FIG. 1 is a depiction of a user interface.
FIG. 2 is an illustration of a template.
FIG. 3 is an illustration of a dynamic data presentation system..
FIG. 4 is an illustration of a view generator.
FIG. 5 is an illustration of a tree representation of a template.
FIG. 6 is an illustration of the representation before post processing.
FIG. 7 is an illustration of the representation after post processing.
FIG. 8 is a diagram illustrating interaction between a client and various components.

Like reference numbers and designations in the various drawings indicate like elements.

### DETAILED DESCRIPTION

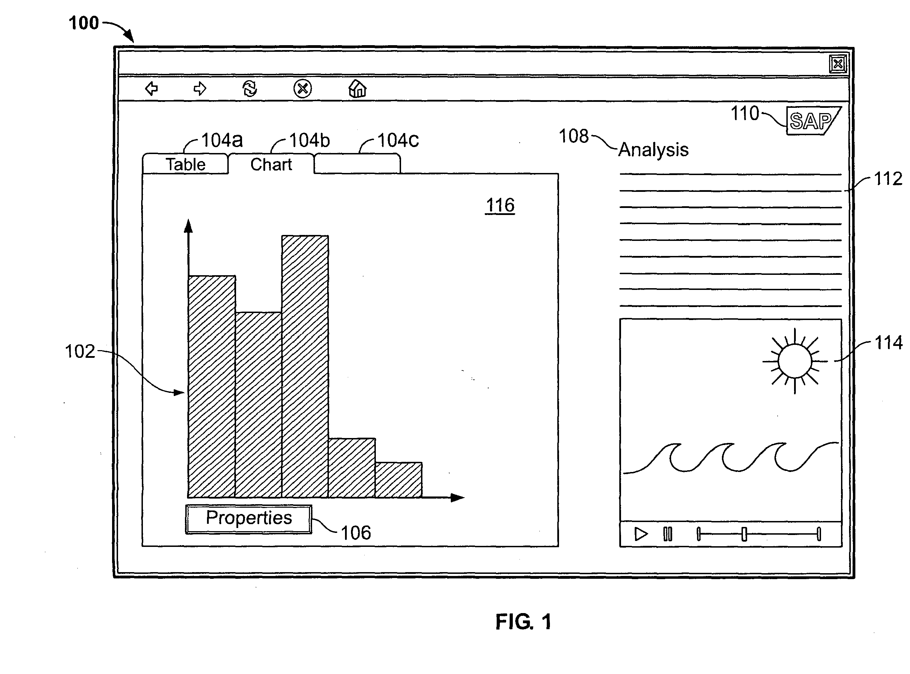

FIG. 1 is a depiction of user interface 100. Although a graphical user interface (GUI) is illustrated, other user interfaces are possible and can include, without limitation, user interfaces that allow for user interaction by means of sound, voice, gesture, eye movement and/or use of remote control devices. The user interface can be provided on a number of devices including, but not limited to, cellular telephones, personal digital assistants, mobile computers, personal computers, and combinations of these. In one implementation, the user interface 100 is presented as one or more pages in a web browser.

Visualization components can be associated with a visual presentation of the visualization components, for example and without limitation, as rendered in user interface 100 (*e.g.*, 102, 104*a*-*c*, 106, 108, 110, 112, 114, and 116). Generally speaking, a visual presentation is a graphical depiction of one or more visualization components. By way of example, the visual presentation can be viewed on a display device or a printed document. In one implementation, the visual presentation can be automatically converted to one or more audible sounds such as spoken words that describe the visualization components. Visualization components can also be associated with a dormant representation which is a non-visual, inaudible representation of the visualization components. In one implementation, the visual presentation is based on the dormant representation. By way of illustration, a rendered Hypertext Markup Language (HTML) document is an example of a visual presentation whereas the underlying HTML document itself is an example of a dormant representation. The dormant representation can be persisted in (without limitation) one or more files, databases, memory buffers, data structures, distributed objects, services, other suitable storage, or combinations of these.

A visualization component can be associated with one or more content providers, and vice versa. For example, a data set representing a distribution could be provided to a chart visualization component as well as a table visualization component, thus allowing two views of the same data. A content provider can provide static content, dynamic content, or a combination of these, to one or more visualization components. By way of a non-limiting illustration, a content provider can include a web service, a database, a distributed object, or other suitable process.

Content can include data in any form (e.g., binary data, clear text, encoded text, or combinations of these) and can be serialized, compressed, encrypted, digitally signed, and/or encoded with digital rights management information. By way of a non-limiting illustration, content can include numeric values, text, images, sounds, music, audio visual presentations, hyperlinks, Uniform Resource Locators (URLs), statements or expressions in a programming language, and combinations of these. Content can be discrete or streaming, and can be obtained from files, databases, web services, distributed objects, remote procedure calls, remote method invocations, and other suitable means (*e.g.*, socket-based connections, pipes, memory, inter-processor communication channels). In one implementation, a content provider can access content using one or more of the following protocols: Java Database Connectivity (JDBC), Simple Object Access Protocol (SOAP), Remote Method Invocation (RMI) and Component Object Model (COM)/Distributed COM (DCOM).

Referring to user interface 100, corporate logo image 110, text heading 108, and text 112 are examples of visualization component representations based on static content. Chart 102 and streaming video presentation 114 are visualization component representations based on dynamic content. The streaming video presentation 114 displays streaming content such as an audio/visual presentation. A tab panel 116 acts as a container for other visualization component representations. For example, the tab panel 116 includes the chart 102 and a properties button 106. A tab panel has an associated tab 104 which, when selected, causes the page to be presented if the page is occluded. If a tab panel is not occluded, selecting its associated tab has no effect. There are three tab panels in this illustration indicated by the three tabs 104*a*-*c* and tab panel 116 is currently selected.

In one implementation, visualization components can include, but are not limited to, those described in Table 1. Moreover, a visualization component can be a composite of two or more visualization components. Many other visualization components are possible.

**TABLE 1**

| **VISUALIZATION COMPONENT** | **DESCRIPTION** |
|---|---|
| Analysis | Renders data in a table with analytical functions. |
| Chart | Renders data in the form of various charts, such as column, profile and line charts. |
| Report | Renders a report. |
| Navigation Pane | Renders a navigation status of a content provider. |
| Filter Pane | Renders selectable characteristic values for filtering. |
| Button Group | Renders a group of buttons that, when selected, can trigger one or more actions. |
| Dropdown Box | Renders selectable contents in a dropdown box. |
| Radio Button Groups | Places characteristic values to be filtered into a group of selection buttons. |
| Checkbox Group | Renders selectable free characteristics as filter values in a group of checkboxes. |
| List Box | Provides the characteristic values for filtering. |
| Hierarchical Filter Selection | Generates a hierarchical filter selection from the hierarchy of a characteristic or a structure, where the hierarchy nodes are displayed in a tree that can be expanded and collapsed. The hierarchy nodes (including leaves of the hierarchy) can be set as a filter. |
| Web Template | Inserts a Web template into another Web template. |
| Container Layout | Arranges visualization components into rows and columns. |
| Container | Combines any content, whether displayed or hidden. |
| Tab Strip | A logical container for tab panels. |
| Tab Panel | A container for visualization components that causes its components to be rendered when the tab panel's associated tab is selected. |
| Group | Groups content. |
| Single Document | Renders a document. |
| List of Documents | Renders a list of documents. |
| Map | Renders a map to visualize business-oriented connections and distributions. |
| System Messages | Renders system messages, information, warnings and error messages. |
| Info Field | Renders information on a content provider, a user, filter values and other information on a web application. |
| Content provider Information | A visualization component that can be used for XML generation of query results data or of the navigation state of a query. |
| Text | Renders text in a default language. |
| Link | Enables the display and execution of a command in the form of a link. |
| List of Exceptions | Lists the existing exceptions and their status (active/not active) for a content provider. |
| List of Conditions | A visualization component for a content provider that displays all the available conditions including their corresponding statuses (active/not active/not applicable/not used). |
| Menu Bar | Renders a menu. |
| Ticker | Renders table content as a ticker. |
| Context Menu | Renders a context menu. |

A template describes a user interface and includes one or more visualization component definitions and associated content provider definitions (if any). In one implementation, each definition specifies whether the definition is for a visualization component or a content provider, provides an identifier for the definition, and specifies the type of visualization component or content provider. A definition can also specify parameters. In one implementation, a parameter is a name/value pair. A single parameter can have multiple name/value pairs. Each name/value pair can have an optional child parameter. This allows building a hierarchical structure of parameter objects. In one implementation, a value can be specified as a textual string, a numeric value or a Boolean value. Parameters can be serialized to both a flat URL query string and a nested Extensible Markup Language (XML) syntax.

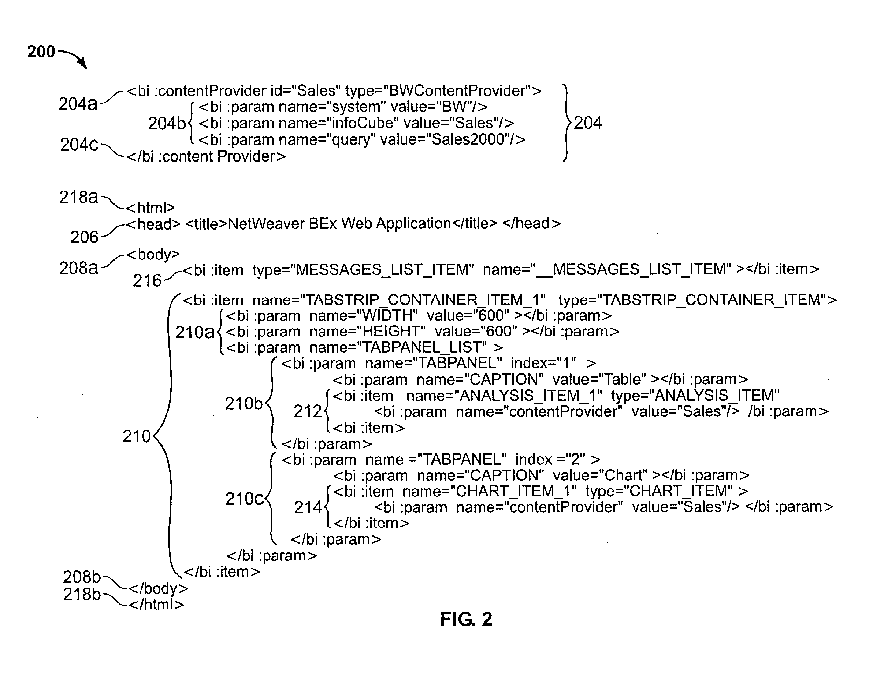

In one implementation and as shown in FIG. 2, a template 200 can include visualization component and content provider placeholder definitions and content such as, but not limited to, HTML, DHTML, Java, JavasScript, Java Server Pages (JSP) tags, and cascading style sheets. (Java® is a registered trademark of Sun Microsystems, Inc of Santa Clara, California. Java and JSP technology are available from Sun Microsystems, Inc.) Additionally, the template may contain "free" content which has an affinity to a certain output format, such as HTML. Visualization component definitions in the template can be related to each other and contained within other visualization components or arbitrary content such as HTML, for example. In one implementation, these relations can be expressed within the template in form of textual references between visualization components and nesting.

Content provider definition 204 is indicated by "contentProvider" start definition 204*a* and end definition 204*c*. The content provider definition 204 creates a content provider identified as "Sales" and having a type "BWContentProvider". The identifier allows the content provider to be referred to by other visualization component and content provider definitions. In one implementation, this cross referencing ability enables definitions in a template to affect other definitions, regardless of where the definitions are placed in the template. This is useful since the state of each visualization component might change during or after rendering. By way of illustration, a given visualization component might cause a message to be rendered as part of another visualization component. Or a given visualization component could alter the appearance of another visualization component such as disabling or enabling it.

Parameters for content provider definitions can be used, for example, to specify the names of databases, Structured Query Language (SQL) statements, URLs, XML documents, web service requests, and other suitable information required to obtain content. In this example, three parameters 204*b* are specified for the "Sales" content provider: a "system" parameter with a value of "BW", an "infoCube" parameter with a value of "Sales", and a "query" parameter with a value of "Sales2000".

In one implementation, a content provider definition can be composed with one or more other content provider definitions to create a composite content provider. Composition of content providers can be specified by nesting definitions. Parameters in outer definitions can specify how content from inner definitions is to be integrated with content in a given outer definition. For example, a parameter could specify that content from inner definitions is to be appended to or otherwise combined (e.g., sorted or merged) with content from an outer definition.

As described above, the template allows arbitrary content to be included. In this illustration, an HTML document is defined by start element 218*a* and end element 218*b*. This allows visualization component definitions nested within the HTML document to be composed in a presentation along with HTML, for example. The "<head>" element 206 contains information about the current document that is generally not rendered, such as keywords that can be mined by search engine web crawlers. The HTML body delimited by definitions 208*a-b* contains the HTML document's content which can be composed and presented to the user in the user interface. Template elements 218*a-b*, 206, 208*a-b* are examples of "free" content. Free content can be rendered without having to convert it into a different format for a desired output format. Here, the free content is HTML. But if the desired output format for visualization components was PostScript® instead of HTML, free could include PostScript expressions in the template. (PostScript is a trademark of Adobe Systems, Incorporated.)

In one implementation, visualization component definitions are indicated by a "<bi : item>" start definition and "</bi : item>" end definition. The HTML document within the template includes two top-level visualization component definitions. The first is a messages list definition 216 (as indicated by the expression type = "MESSAGES_LIST_ITEM"), having a name of "_MESSAGES_LIST_ITEM" which can be referenced by other visualization components to post user notification messages in a rendering of the template. By way of illustration, a visual presentation of the message list definition could be a scrolling window on user interface 100.

The second top-level visualization component definition is a tab strip 210 as indicated by the expression type = "TABSTRIP_CONTAINER_ITEM". In one implementation, a tab strip is a logical container for tab panels. The tab strip definition 210 includes three top-level parameters 210*a* that specify the tab panel dimensions and members. The tab panel members are specified by child parameters having the name "TABPANEL" and a numeric index value indicating the tab panel's position in the tab strip. The first tab panel definition 210*b* will have visual tab labeled "Table" (104*a* in FIG. 1) and includes a visualization component definition 212 named "ANALYSIS_ITEM_1" of type "ANALYSIS_ITEM". In one implementation, a visualization component of type "ANALYSIS_ITEM" can be rendered as an interactive table similar to a spread sheet that contains data obtained from a content provider. Here, the content provider is specified by the "contentProvider" parameter and designates the "Sales" content provider definition 204.

The second tab panel definition 210c will have visual tab labeled "Chart" (104*b* in FIG. 1) and includes a visualization component definition 214 named "CHART_ITEM_1" of type "CHART_ITEM". In one implementation, a visualization component of type "CHART_ITEM" can be rendered as an interactive chart which displays data obtained from a content provider. The content provider is specified by the "contentProvider" parameter and also designates the "Sales" content provider definition 204.

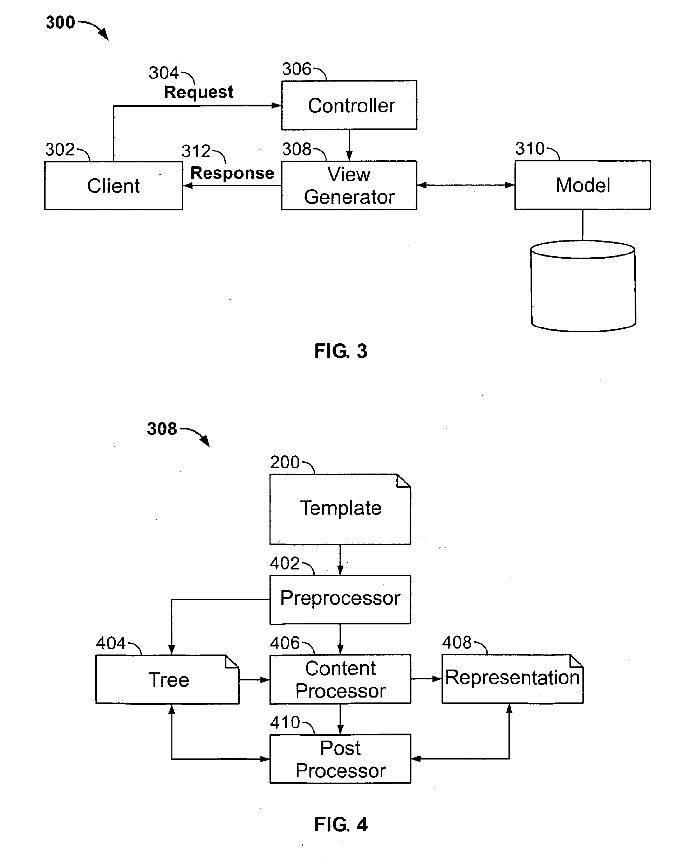

FIG. 3 is an illustration of a dynamic data presentation framework or system 300. In one implementation, the system 300 is based on a model-view-controller design pattern. The controller component 306 which can communicate with a client component 302 from which the controller 306 receives requests and/or commands and dispatches their handling to a view generator component 308. The view generator 308 is responsible for generating a dormant representation based on a template identified by or provided with the request. The model component 310 incorporates one or more content providers from which the view generator can obtain content for the dormant representation. The dormant representation is then provided to the client 302 which can optionally present a visual presentation of the dormant representation.

In one implementation, the client component 302 (*e.g.*, a web browser or other suitable entity including an object in the same runtime environment as the controller 306) generates a request 304 that identifies a desired template. In one implementation, the request is a Hypertext Transfer Protocol (HTPP) request for a template that includes one or more visualization component definitions and, optionally, one or more content provider definitions. The request is received by the controller component 306. In one implementation, the controller 306 is a servlet. The controller 306 can determine a view generator component 308 to which to delegate handling of the request based on the request or other factors. When there is more than one view generator, as in the case of a cluster, grid, farm or other parallel arrangement, the controller 306 can select the view generator 308 based on any number of algorithms including, but not limited to, load balancing algorithms and hashing algorithms.

The selected view generator 308 handles the request (or some form of the request) by generating a dormant representation corresponding to the template. This can entail processing the template identified by, or provided with, the request and obtaining content from one or more content provider components 310. The dormant representation is provided to the client in response 312, which may include one or more packets of information. In one implementation, the dormant representation is markup that can be interpreted by a web browser. However, other output formats are possible such as, but not limited to, Portable Document Format (PDF), Multipurpose Internet Mail Extensions (MIME), Binary Interchange File Format (BIFF), Flash (available from Adobe Systems, Incorporated of San Jose, California), and combinations of these.

The operations described can be implemented by more or fewer components, with or without access to external databases. The components can be distributed across one or more computing devices connected by one or more wired or wireless networks, shared memory or other suitable means of sharing information. The client 302 can communicate with a user interface on a cellular telephone, personal digital assistant, mobile computer, personal computer, and/or combinations thereof. In one implementation, the controller 306 or the view generator 308 can recognize the type of device that the client 302 is coupled to and provide output suitable for that device. In another implementation, the dormant representations provided to the client 302 can be computed ahead of time and provided to the client 302 in batch to allow the client to be used in an off-line mode.

FIG. 4 is an illustration of the view generator 308. A preprocessor 402 obtains a template 200 based on a request or command from the controller 306. In one implementation, the template is part of the request. The preprocessor 402 can parse the template in order to verify its syntactic and semantic correctness, and to create a dormant representation 408 of the template. A syntax rule that can be enforced by the parser, for example, requires that an opening parameter definition be associated with a surrounding visualization component definition as shown here:
<bi : item ...>
   <bi:param ...> ... </bi:param>
</bi:item>
The parser's grammar can be used to enforce syntactic rules and semantic rules.

Additionally, visualization components and content providers can be associated with information or rules defining appropriate parameter values and uses which can be enforced by the preprocessor. In one implementation, metadata for visualization components and data providers can specify permissible parameter values and ranges of values, default parameter values, illegal combinations of parameter values, and other suitable information. The metadata can be consulted during template development to help the user create a correct template and during the processing of definitions. Potential runtime errors can also be caught. For example, if a data provider definition specifies a web service, the web service can be queried to see if it is available and that the user is authorized to access the specified content. In one implementation, an error page containing a list of errors encountered by the preprocessor 402 can be provided to client 302 instead of the user interface described by the template 200.

A hierarchical representation 404 (*e.g.*, a tree) can be created by the preprocessor 402 to represent the template wherein a node in the tree 404 represents a piece of the template 200. In one implementation, the tree 404 can be created as the template is parsed or afterwards. The tree 404 can include parent-child relationships that reflect the structure of nesting in the template 200. Each node in the tree can contain information such as parameter values, rendering state, runtime state and other information necessary for rendering a visualization component or free content represented by the node. In one implementation, nodes in the tree 404 represent each visualization component definition and the overall structure of the user interface. In another implementation, there is a node in the tree 404 for each visualization component definition and each occurrence of free content.

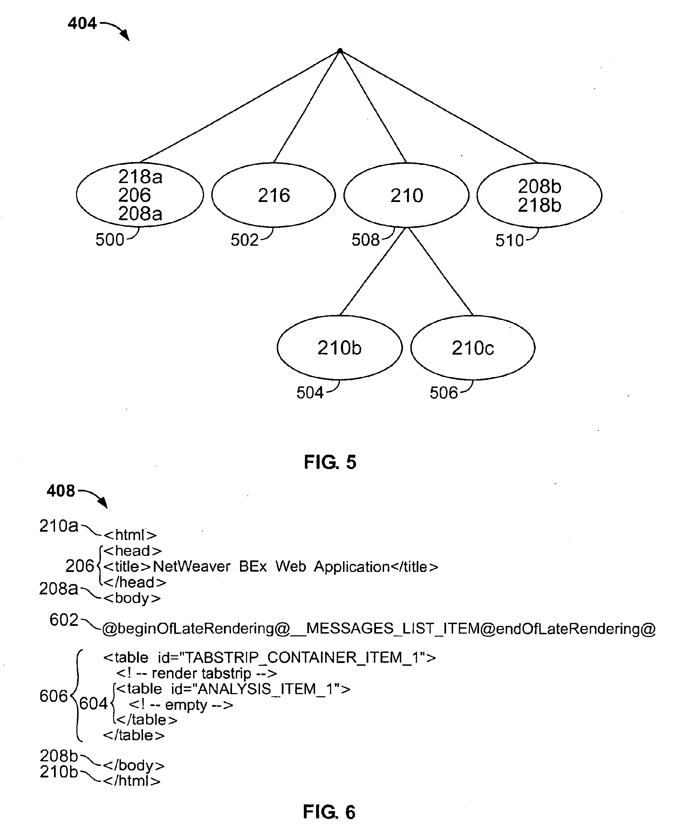

With reference to FIGS. 2 and 5 and by way of illustration, the tree 404 includes two nodes representing the free content in the template 200. Node 500 represents free content 218*a*, 206 and 208*a*. Node 510 represents free content elements 208*b* and 218*b*. Node 502 represents the top-level message visualization component definition 216. Node 508 represents the top-level tab strip visualization component definition 210. Node 508 has two children: nodes 504 and 506. Child node 504 represents nested visualization component definition 210*b* for the ANALYSIS_ITEM_1 tab panel and child node 506 represents visualization component definition 210c for the CHART_ITEM_1 tab panel. Although only one example of a hierarchical representation of the template 200 is presented, other representations are possible. In one implementation, the tree 400 can be used during content processing (component 406) and post processing (component 410) for accessing template definitions and rendering output.

A content processor 406 creates a dormant representation 408 of the visualization components and free content in the tree 404 according to a desired output format. In one implementation, the dormant representation 408 is a file that can be displayed by a web browser. Creating a rendering of a visualization component can include obtaining content from one or more content providers and converting the content to a desired output format. In one implementation, each node in the tree is responsible for creating a rendering of itself according to the desired output format for the representation 408. This flexibility allows user interfaces to be easily printed merely by instructing each node to render a PDF version of itself, for example. In the case of free content nodes, if the desired output format is the same as the free content, rendering is merely a transfer of the free content to the output representation 408. Otherwise, the free content node converts the free content into the desired output format.

In one implementation, the content processor component 406 delegates rendering to a servlet. FIG. 6 is an illustration of the dormant representation 408 before post processing. The content processor component 406 can copy free content (218*a*, 206, 208*a*, 208*b*, 218*b*) into the dormant representation 408, and invoke functionality for processing content provider and visualization component definitions. The functionality can utilize the tree 404 to produce output by causing appropriate nodes to render themselves in the dormant representation 408. For example, the tab strip node 508 and its analysis item child 504 both render themselves in HTML as tables. This is reflected in the dormant representation 408 as an HTML table 604 (for node 504) nested within another table 606 (for node 508).

The state of each visualization component (*e.g.*, as maintained by a tree node) might change during rendering. Therefore, modification of the dormant representation 408 can be required. There are cases where visualization component definitions in the template need to determine their rendering based on information which is only available when subsequent visualization component definitions in the template have been rendered. By way of illustration, if a system message visualization component defined earlier in the template (*e.g.*, message list definition 216) is used by visualization components defined later in the template (*e.g.*, visualization component definitions 212 and 214), those visualization components will not be able to contribute output to the system messages if rendering of the template is a single, top down pass.

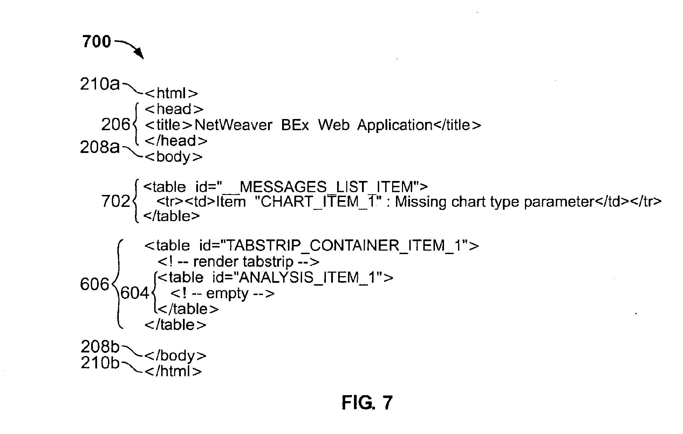

In one implementation, this can be solved by a post processor component 410 that performs "late" rendering over the already rendered dormant representation 408. The post processor 410 allows a node in the tree 404 the opportunity to modify the node's rendering in the dormant representation 408 and the rendering of other nodes. If necessary, a node can introspect the overall tree 404 and consider the state of its parent, sibling, and child nodes in determining how to modify the dormant representation 408. For example, if the tab strip node 508 determined that it lacked children, it could post an error message to the message list node 216, even though that node has already been rendered. Moreover, a node is not restricted to replace rendering at a single location in the dormant representation 408. In one implementation, the content processor 406 causes markers to be placed in the dormant representation 408 which can be used to subsequently locate a position for the output of a node in the dormant representation 408. For example notice that a marker 602 (FIG. 6) was produced in the dormant representation 408 for the message list node 502. This marker is replaced during post processing with HTML 702 (FIG. 7). In this example, the node 506 has provided a message to node 502 during post processing indicating that the user did not specify a chart type parameter.

In one implementation, nodes in the tree 404 can be post processed in an order determined by a node priority where the priority denotes the dependency between the renderings of late rendering items. For example, nodes that modify the rendering of other nodes would have a higher priority than those that do not. During post processing, nodes with a high priority can be given the opportunity to modify the dormant representation 408 after nodes with lower priority. Different levels of priorities can be established so that the dormant representation 408 is modified in stages corresponding to the priorities.

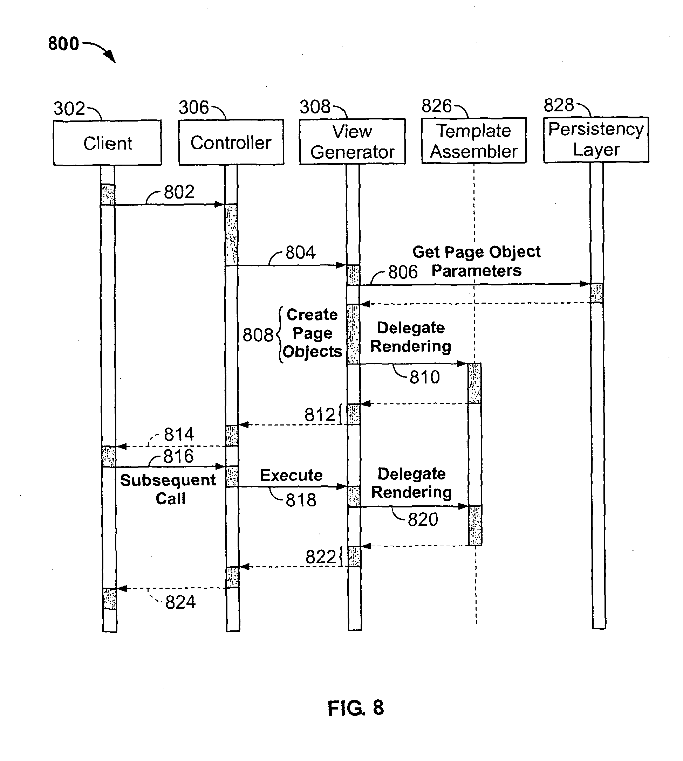

FIG. 8 is a diagram 800 illustrating interaction between the client 302 and various components. In one implementation, an initial request for a template is sent from the client 302 and received by the controller 306 (step 802). The controller 306 delegates handling of the request to a view generator 308 (step 804). In one implementation, a persistency layer 828 can be queried (step 806) in order to determine if mandatory parameters were omitted from the template and/or if the specified parameters are acceptable. For example, a chart visualization component requires a chart type parameter before it can be rendered. The user by way of the client 302 can be prompted to provide any missing mandatory parameters before the template is rendered. Alternatively, default values for missing parameters can be provided. The preprocessor 402 parses the template and instantiates content provider objects and visualization component nodes (step 808). Visualization component nodes are incorporated into a tree representation 404 of the template.

After the objects are instantiated, an initial pass at rendering is delegated to the template assembler 826. Definition processing is performed for the visualization component and content provider definitions in the template. The definition processing can access the tree representation 404 in order to create renderings of the visualization components. In one implementation, the definition processing can also access the persistency layer 828 in order to obtain content or other information required for rendering. Post processing of the dormant representation 408 can take place after the initial rendering (step 812) to modify the dormant representation 408, if required. The dormant representation 408 is then provided to the client 302 (step 814). The client 302 can then visually present the dormant representation 408.

In one implementation, the client 302 can send a subsequent request for the same template to the controller 306 (step 816). The controller 306 delegates processing of the request to the view generator 308 (step 818). The template does not need to be parsed since this tree representation 404 was created during processing of the last request. Initial rendering of the template is delegated to the template assembler for the template (step 820). Post processing is performed on the dormant representation 408, if required (step 822). The dormant representation is then provided to the client 302 (step 824). The client 302 can then visually present the dormant representation 408.

The invention and all of the functional operations described in this specification can be implemented in digital electronic circuitry, or in computer software, firmware, or hardware, including the structural means disclosed in this specification and structural equivalents thereof, or in combinations of them. The invention can be implemented as one or more computer program products, i.e., one or more computer programs tangibly embodied in an information carrier, e.g., in a machine-readable storage device or in a propagated signal, for execution by, or to control the operation of, data processing apparatus, e.g., a programmable processor, a computer, or multiple computers. A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the invention, can be performed by one or more programmable processors executing one or more computer programs to perform functions of the invention by operating on input data and generating output. The processes and logic flows can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component (e.g., a data server), a middleware component (e.g., an application server), or a front-end component (e.g., a client computer having a graphical user interface or a Web browser through which a user can interact with an implementation of the invention), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The invention has been described in terms of particular implementations, but other implementations can be implemented and are within the scope of the following claims.

## Claims

1. A computer program product, tangibly embodied in an information carrier, the computer program product being operable to cause an apparatus to:
receive a template for a dormant representation, the template including a first visualization component definition occurring before a second visualization component definition;
create the dormant representation according to an output format, the dormant representation including a first rendering of the first visualization component definition, and a second rendering of the second visualization component definition; and
modify the first rendering in the dormant representation based on state associated with the second visualization component definition.

2. The computer program product of claim 1, further operable to cause the apparatus to:
associate first content and second content with the first and second visualization component definitions, respectively, the first content and the second content obtained from one or more content providers.

3. The computer program product of claim 2, where:
the one or more content providers are specified by one or more definitions included in the template.

4. The computer program product of anyone of the preceding claims where:
the second visualization component definition is nested in the first visualization component definition.

5. The computer program product of anyone of the preceding claims, further operable to cause the apparatus to:
convert free content in the template into the output format if the free content has a format that is different from the output format.

6. The computer program product of anyone of the preceding claims, further operable to cause the apparatus to:
modify the second rendering in the dormant representation based on state associated with the first visualization component definition.

7. The computer program product of anyone of the preceding claims, where:
the output format is one of: HTML, DHTML, XML, BIFF or PDF.

8. The computer program product of anyone of the preceding claims, further operable to cause the apparatus to:
visually present the dormant representation.

9. The computer program product of anyone of the preceding claims, where:
the template includes free content.

10. A system comprising one or more components configured to perform the following operations:
receiving a template for a dormant representation, the template including a first visualization component definition occurring before a second visualization component definition;
creating the dormant representation according to an output format and based on the template, the dormant representation including a first rendering of the first visualization component definition; and
modifying the first rendering in the dormant representation based on state associated with the second visualization component definition.

11. The system of claim 10, further configured to perform the following operations:
associate first content and second content with the first and second visualization component definitions, respectively, the first content and the second content obtained from one or more content providers.

12. The system of claim 11, where:
the one or more content providers are specified by one or more definitions included in the template.

13. The system of anyone of claims 10 to 12, where:
the second visualization component definition is nested in the first visualization component definition.

14. The system of anyone of claims 10 to 13, further configured to perform the following operations:
converting free content in the template into the output format if the free content has a format that is different from the output format.

15. The system of anyone of claims 10 to 14, further configured to perform the following operations:
modifying a second rendering of the second visualization component definition in the dormant representation based on state associated with the first visualization component definition.

16. The system of anyone of claims 10 to 15, where:
the output format is one of: HTML, DHTML, XML, BIFF, or PDF.

17. The system of anyone of claims 10 to 16, where:
the template includes free content.

18. A method comprising:
receiving a template for a dormant representation, the template including a plurality of visualization component definitions;
creating the dormant representation according to an output format, the dormant representation including a rendering of each visualization component definition according to a first order; and
modifying the rendering of one or more of the plurality of visualization component definitions in the dormant representation according to a second order, the second order being different from the first order and being determined by a rendering dependency.

19. The method of claim 18, further comprising:
associating dynamic content with one or more of the plurality of visualization component definitions, the dynamic content included in the dormant representation.

20. The method of claim 18 or 19, where:
the rendering dependency is based on state associated with each of the plurality of visualization component definitions.

21. The method of claim 20, where:
the dormant representation has a corresponding visual presentation.
